# EUROPEAN PATENT APPLICATION

(11) **EP 4 389 482 A2**
(43) Date of publication of application: **26.06.2024**
(21) Application number: 24170751.2
(22) Date of filing: 09.08.2022
(51) Int. Cl.: B60K 11/04

(54) **CENTER-OPENING PANEL FOR CONTROLLING AIR FLOW THROUGH A HEAT EXCHANGER**

(30) Priority: 09.08.2021 US 202163231043 P
(62) Divisional of application: 22764518.1
(71) Applicant: Magna Exteriors Inc., Aurora, ON L4G 7K1 (CA)
(72) Inventor: Manhire, Jeffrey Bruce, ROCHESTER, 48306 (US); Lindberg, Braendon R., METAMORA, 48455 (US)
(74) Representative: Glawe, Delfs, Moll

(57) **Abstract**

An air flow control panel (100; 200) for controlling the flow of air into a vehicle. The air flow control panel (100; 200) includes an air inlet for a vehicle providing an air flow path, a drum (112; 212) rotatably positioned below the air inlet, a scissor jack (114; 214) connected to an actuator (116; 216), and a sheet (119; 218) connected at a first end to the drum (112; 212) and at a second end to the scissor jack (114; 214), wherein movement of the scissorjack (114; 214) between the extended position and the retracted position causes the sheet (119; 218) to move between a closed position, wherein the sheet (119; 218) extends across the air flow path and blocks the flow of air through the air inlet, and an open position wherein the sheet (119; 218) is rolled onto the drum (112; 212) so that the sheet (119; 218) is positioned out of the air flow path and air moves through the air inlet.

## Description

### FIELD OF THE INVENTION

The present invention relates to an air flow control device for a vehicle having a fabric or mesh panel.

### BACKGROUND

Several current active grill shutter system designs implement vanes for opening and closing an airflow path. The use of vanes causes leak paths between the vanes contributing to lower aerodynamics and decrease efficiency. This results in higher emissions for internal combustion vehicles and lower driving range for electric vehicles. Fabric- panel roller shade style devices have been developed but include complicated mechanisms for controlling the panel. Also, fabric panel shades which open from the bottom do not provide optimal airflow through the cooling module when only partially opened, as the airflow is focused on the bottom of the heat exchanger.

There is a need to provide similar aerodynamic efficiency achieved by roller shade style systems that have reduced complexity as disclosed e.g. in US 202010208925 A1.

### SUMMARY OF THE INVENTION

According to the invention, an air flow control panel for controlling the flow of air into a vehicle with the features of claim 1 is provided.

The following is a numbered list of aspects of the invention:
1. An air flow control panel for controlling the flow of air into a vehicle comprising:
   an air inlet for a vehicle providing an air flow path;
   an upper drum rotatably positioned above the air inlet;
   a lower drum rotatably positioned below the air inlet;
   a first sheet connected at an upper end to the upper drum and a lower end connected to the lower drum such that the first sheet extends across the air flow path, the first sheet has a window portion and a closed portion, wherein the closed portion of the first sheet winds on the lower drum as the first sheet moves between an open position and a closed position;
   a second sheet connected at an upper end to the upper drum and a lower end connected to the lower drum such that the second sheet extends across the air flow path, the second sheet has a window portion and a closed portion, wherein the closed potion of the second sheet of material winds on the upper drum as the second sheet moves between an open position and a closed position, wherein the second sheet of material extends parallel to the first sheet across the air inlet and when the first sheet and the second sheet are in the open position, the window portion of the first sheet and the window portion of the second sheet are aligned in the air inlet and allow air to flow through the air flow path of the air inlet, and when the first sheet and the second sheet are in the closed position, the closed portion of the first sheet blocks the open window portion of the second sheet, and the closed portion of the second sheet blocks the open window portion of the first sheet to block the air inlet and air flow through the air flow path.
2. The air flow control panel of aspect 1 further comprising:
   at least one support material strip of the first sheet that extends along one edge of the first sheet and connects to the upper drum and the lower drum; and
   at least one support material strip of the second sheet that extends along one edge of the second sheet and connects to the upper drum and the lower drum.
3. The air flow control panel of aspect 1 further comprising:
   wherein the first sheet is positioned in the air flow path upstream of the second sheet;
   a rib extending across the air inlet downstream of both the first sheet and the second sheet, wherein the rib provide support to the first sheet and the second sheet as the air passes through the air inlet.
4. The air flow panel of aspect 3 further comprising:
   at least one seal on the first sheet that extends along an edge of the window portion of the first sheet between the window portion and the closed portion of the first sheet, wherein when the first sheet moves to the closed position the at least one seal of the first sheet contact the at least one seal of the second sheet, and
   at least one seal on the second sheet that extends along an edge of the window portion of the second sheet between the window portion and the closed portion of the second sheet, wherein when the second sheet moves to the closed position the at least one seal contacts a stop on the rib.
5. The air flow panel of aspect 1 further comprising:
   at least one seal on the first sheet that extends along an edge of the window portion of the first sheet between the window portion and the closed portion of the first sheet, and
   at least one seal on the second sheet that extends along an edge of the window portion of the second sheet between the window portion and the closed portion of the second sheet, wherein when the first sheet and the second move to the closed position the seal of the first sheet and the seal of the second sheet come into contact.
6. The air flow panel of aspect 5 wherein when the first sheet moves to the open position the at least one seal of the first sheet contacts a stop on a frame of the air flow panel and then the second sheet moves to the open position the at least one seal of the second sheet contacts a stop on the frame of the air flow panel.
7. An air flow control panel for controlling the flow of air into a vehicle comprising:
   an air inlet for a vehicle providing an air flow path;
   a drum rotatably positioned below the air inlet;
   a scissor jack connected to an actuator, the scissor jack is located above the drum and moves between an extended position where the scissor jack extends across the air inlet and a retracted position where substantial portion of the scissor jack is outside the air inlet;
   a sheet connected at a first end to the drum and at a second end to the scissor jack, wherein movement of the scissor jack between the extended position and the retracted position causes the sheet to move between a closed position, wherein the sheet extends across the air flow path and blocks the flow of air through the air inlet, and an open position wherein the sheet is rolled onto the drum so that the sheet is positioned out of the air flow path and air moves through the air inlet.
8. The air flow control panel of aspect 7 further comprising a torsion spring connected to the drum and biasing the drum to rotate so that the sheet moves to the open position and is rolled onto the drum.
9. The air flow control panel of aspect 7 further comprising wherein the scissor jack is located above the air inlet and pulls the sheet to the closed position when the scissor jack moves to the retracted position.
10. The air flow control panel of aspect 7 further comprising wherein the scissor jack is located below the air inlet and pushes the sheet to the closed position when the scissor jack moves to the extended position.

### BRIEF DESCRIPTION OF THE DRAWINGS

The present invention will become more fully understood from the detailed description and the accompanying drawings, wherein:
Fig. 1 is a front side perspective view of an air flow control panel in the closed position.
Fig. 2 is a front side perspective view of the air flow control panel in the open position.
Fig. 3 is a side schematic view of a portion of the first sheet and second sheet in the closed position where the two edges of the first sheet and the second sheet meet.
Fig. 4 is a side schematic view of a portion of the first sheet in the open position at the location of the end stop.
Fig. 5 is a front side view of the first sheet and second sheet having support material portions.
Fig. 6 is a side schematic view of a portion of the first sheet and second sheet in the closed position with a rib.
Fig. 7 is a side schematic view of a portion of the first sheet and second sheet in the open position with the rib.
Fig. 8 is a front side perspective view of the air flow control panel according to an alternate embodiment of the invention in an open position.
Fig. 9 is a front side perspective view of the air flow control panel of Fig. 8 in a closed position.
Fig. 10 is a front side perspective view of the air flow control panel according to an alternate embodiment of the invention.
Fig. 11 is a partial cross-sectional side elevational view of an alternate rib construction according to an alternate embodiment of the invention.
Fig. 12 is a side perspective view of the alternate rib construction according to an alternate embodiment of the invention.

### DETAILED DESCRIPTION OF THE PREFERRED EMBODIMENTS

The following description of the preferred embodiments is merely exemplary in nature and is in no way intended to limit the invention, its application, or uses.

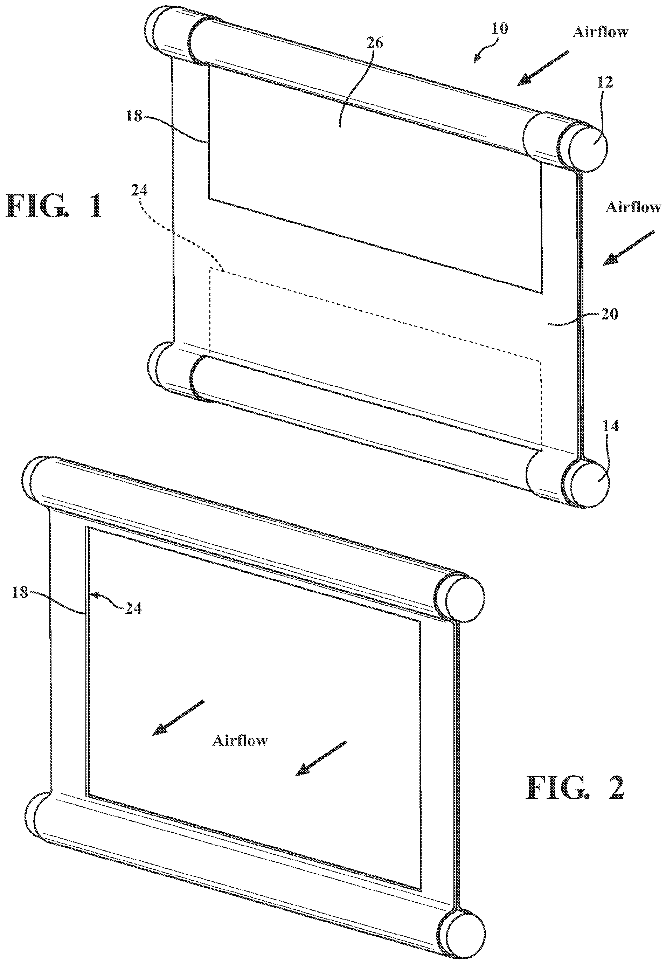

Referring now the Figs. 1-2 air flow control panel 10 according to a first embodiment of the invention is shown. The air flow control panel 10 is used for controlling the flow of air into a vehicle. The vehicle has an air inlet defining an air flow path. The air inlet and air flow path can be for many different types of applications, including, but not limited to a combustion engine air intake, active aerodynamics passages, vehicle battery or electric motor cooling passages and vehicle cabin air inlet passages.

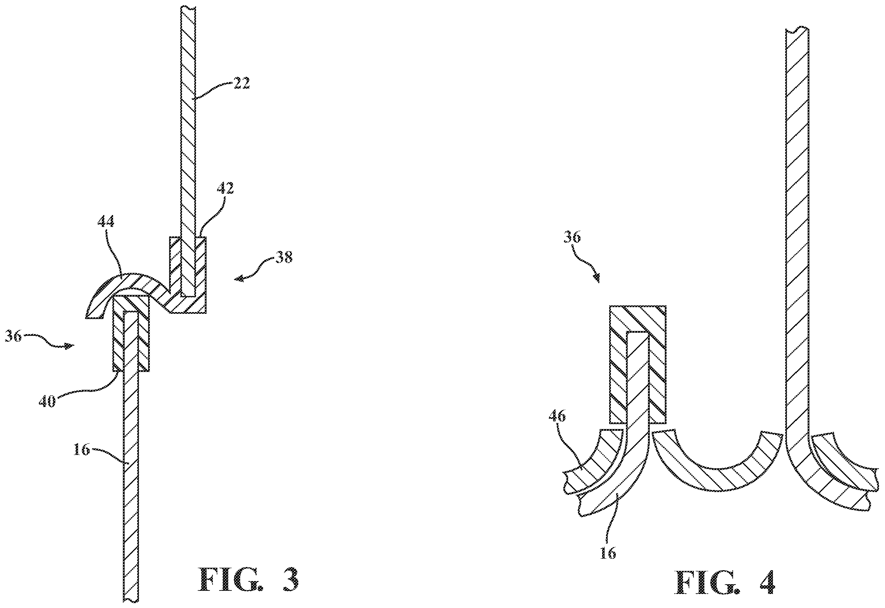

As shown in Figs. 1 and 2 the air flow control panel 10 an upper drum 12 is rotatably positioned at a location above where an air inlet would be located. A lower drum 14 is rotatably positioned below the air inlet. While an above and below orientation is shown it is within the scope of the invention for the drums to be positioned on the left and right side for horizontal rather than vertical opening and closing. Also referring to Figs. 3, 6 and 7 there is a first sheet 16 connected at an upper end to the upper drum 12 and a lower end connected to the lower drum 14 such that the first sheet 16 extends across the air flow path. The first sheet 16 has a window portion 18 and a closed portion 20. The first sheet 16 rotates on the lower drum 14 between an open position, shown in Fig. 2, and a closed position shown in Fig. 1.

The air flow control panel 10 further includes a second sheet 22 connected at an upper end to the upper drum 12 and a lower end connected to the lower drum 14 such that the second sheet 22 extends across the air flow path, the second sheet 22 has a window portion 24 and a closed portion 26. The second sheet of material rotates on the upper drum 12 between an open position and a closed position. The second sheet 22 of material extends parallel to the first sheet 16 across the air inlet. When the first sheet 16 and the second sheet 22 are in the open position, the window portion 18 of the first sheet 16 and the window portion 24 of the second sheet 22 are aligned in the air inlet and allow air to flow through the air flow path of the air inlet.

When the first sheet 16 and the second sheet 22 are in the closed position, the closed portion 20 of the first sheet 16 blocks the open window portion 24 of the second sheet 22, and the closed portion 20 of the second sheet 22 blocks the open window portion 18 of the first sheet 16 to block the air inlet and air flow through the air flow path. When the first sheet 16 and the second sheet 22 are in the open position, the closed portion 20 of the first sheet 16 is rolled onto the upper drum 12, while the closed portion of the second sheet 22 is rolled onto the lower drum 14 thereby aligning the window portion 18 of the first sheet 16 with the window portion 24 of the second sheet 22 to allow air flow through the air flow path of the air inlet.

While the invention describes the first sheet 16 being rolled onto the upper drum 12 and the second sheet 22 being rolled onto the lower drum 14, it is within the scope of this invention for first sheet 16 to be rolled onto the lower drum 14 and the second sheet 22 to be rolled onto the upper drum 12. The upper drum 12 and the lower drum 14 are of sufficient diameter so that the sheet is not rolled onto the respective upper drum 12 and lower drum 14 in layers, but instead the diameter of the upper drum 12 and lower drum 14 is such that the closed section and open section of the first sheet and second sheet roll onto the respective upper drum 12 and lower drum 14 so that each section rolls on to the drum. In an alternate embodiment of the invention the first sheet 16 and the second sheet 22 are actually portions of a single continuous sheet with upper and lower pinch sections of the sheet that slide into the respective upper drum 12 and lower drum 14. The pinch sections help to ensure that the single continuous sheet remain in alignment on the upper drum 12 and lower drum 14. In another embodiment of the invention the first sheet 16 and second sheet 22 are separate sheets each having two ends connected to the upper drum 12 and lower drum 14. The closed portion 20, 26 of the respective first sheet 16 and second sheet 22 are made of woven fabric such as recycled grate PET or nylon material.

In embodiments where the first sheet 16 and second sheet 22 are a single sheet connected together, the air flow control panel 10 is operated by using an actuator that is connected to either the upper drum 12 or the lower drum 14. The actuator rotates the drum, thereby causing the first sheet 16 and second sheet 22 to wind around the respective upper drum 12 and lower drum 14. It is also within the scope of this invention for two actuators to be used, one connected to the upper drum 12 and one connected to the lower drum 14. This type of configuration would be necessary in embodiments where the first sheet 16 and the second sheet 22 are separate and connected independently to one of the upper drum 12 or lower drum 14.

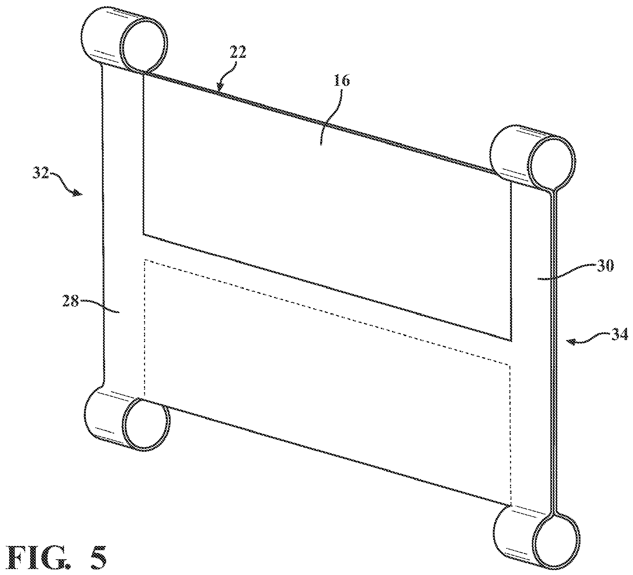

Referring now to Fig. 5 another feature of the first sheet 16 and second sheet 22 are shown with the upper drum 12 and lower drum 14 being removed. The first sheet 16 and the second sheet 22 both have a support material strip 28, 30 that extends along a respective edge 32, 34, which as shown are at opposing edges located on opposite sides of air inlet, the first sheet 16 and second sheet 22. The support material strip 28, 30 are portions of the first sheet 16 and second sheet 22 that are made of different support material that helps to provide rigidity to the first sheet 16 and second sheet 20 along edges 32,34. In this embodiment of the invention the first sheet 16 and the second sheet 22 are connected together as a single sheet, therefore the same support material strip 28, 30 is present because the support material strip 28, 30 are a supporting region of the first sheet 16 and the second sheet 22, which are connected together. Each support material strip 28, 30 is connected to the respective upper drum 12 and lower drum 14.

Referring now to Figs. 3 and 4, details of the movement of the first sheet 16 and second sheet 22 between the closed and open positions is shown. In particular Fig. 3 shows the first sheet 16 and the second sheet 22 in the closed position. The first sheet 16 has a seal 36 located along the edge of the window portion 18. The second sheet 22 has a seal 38 located along the edge of the window portion 24. The seal 36 includes a stop surface 40 along a bottom edge of the seal 36, while the seal 38 has a stop surface 42 along a top edge. When the first sheet 16 and the second sheet 22 are positioned in the closed position, the seal 36 of the first sheet 16 and the seal 38 of the second sheet move close to one another and a flexible element 44 extends from the seal 38 and comes into contact with the seal 36 in order to prevent air from flowing between the seal 36 and the seal 38. The flexible element 44 can also extend from the seal 36 and come into contact with the seal 38 depending on a particular application. The flexible element 44 is a flexible rubber fin that can be made of other materials such as silicone.

Referring now to Fig 4 the first sheet 16 and the second sheet 22 are shown in the open position. The seal 36 also serves the purpose of preventing over travel of the first sheet 16 past a frame 46. The same also occurs at the opposite end of the frame with respect to the second sheet 22 and the seal 38. As shown in Fig. 4 the stop surface 40 comes into contact with a frame 46 of the airflow control panel 10. This prevents overwinding of the first sheet 16.

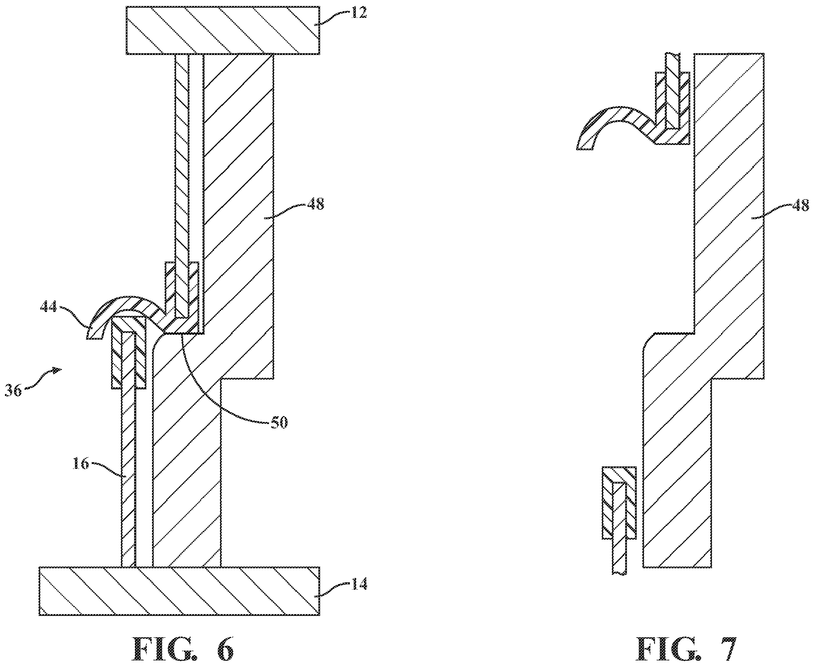

Referring now to Figs. 6 and 7 an additional feature of the invention is shown. The first sheet 16 is positioned in the air flow path upstream of the second sheet 22. A rib 48 extends across the air inlet downstream of both the first sheet 16 and the second sheet 22. The rib 48 provides support to the first sheet 16 and the second sheet 22 as the air passes through the air inlet. The seal 36 on the first sheet 16 extends along an edge of the window portion 18 of the first sheet 16 between the window portion 18 and the closed portion 20 of the first sheet 16. The seal 38 on the second sheet 22 extends along an edge of the window portion 24 of the second sheet 22 between the window portion 24 and the closed portion 26 of the second sheet 22. When the second sheet 22 moves to the closed position the seal 38 contacts a stop 50 on the rib 48. Meanwhile the seal 36 contacts the flexible element 44. The rib 48 helps to support the first sheet 16 and the second sheet 22 when moving between the open and closed positions, particularly when the vehicle is moving and the velocity of air flowing through the air flow path is high.

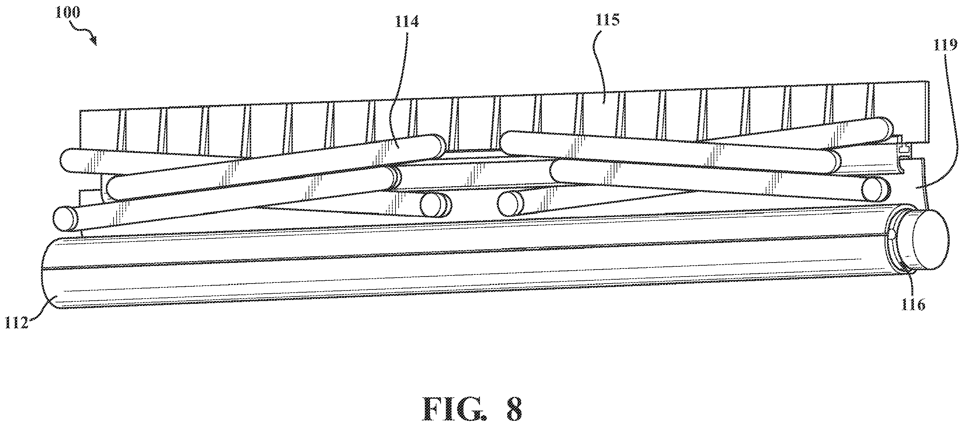

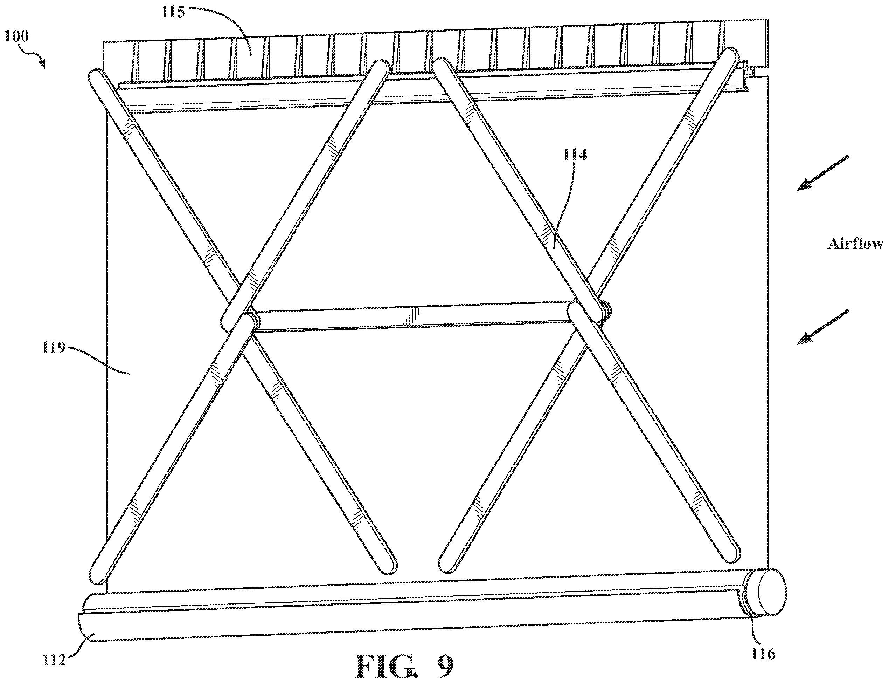

Referring now to Figs. 8 and 9 an alternate embodiment of an air flow control panel 100 is shown. In this embodiment there is a drum 112 rotatably positioned below the air inlet. The direction of airflow is shown by the airflow direction arrows. While the drum 112 is shown and being below the air inlet, it is within the scope of this invention for the drum 112 to be positioned above the air inlet. There is a scissor jack 114, which is shown as being parallel to or located above the drum 112. The scissor jack 114 is connected to an actuator 116 which moves the scissor jack 114 between an extended position, where the scissor jack 114 extends across the air inlet and a retracted position where at least substantial portion of the scissor jack 114 is outside the air inlet.

The air flow control panel 100 further includes a sheet 119 connected at a first end to the drum 112 and at a second end to the scissor jack 114. Movement of the scissor jack 114 between the extended position and the retracted position causes the sheet 119 to move between a closed position, wherein the sheet 118 extends across the air flow path and blocks the flow of air through the air inlet, and an open position wherein the sheet 119 is rolled onto the drum 112 so that the sheet is positioned out of the air flow path and air moves through the air inlet. Connected to the drum 112 is a torsion spring that biases the drum 112 to rotate and wind the sheet 119 onto the drum 112, thereby biasing the sheet 119 toward the open position. The scissor jack 114 will push the sheet 119 upward against the spring bias of the torsion spring.

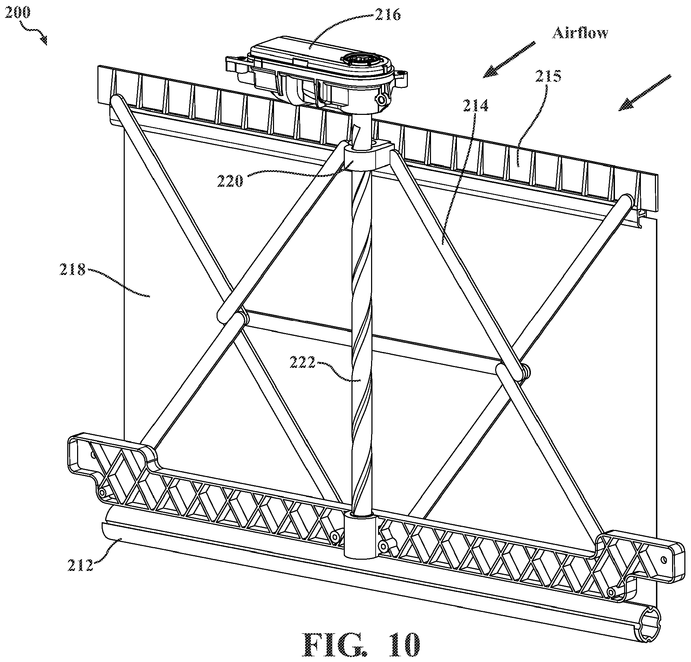

Referring now to Fig. 10 there is another alternate embodiment of an air flow control panel 200 that is a variation of the air flow control panel 100 of Figs. 8 and 9. The air flow control panel 200 includes a drum 212 rotatably positioned below the air inlet. While the drum 212 is shown and being below the air inlet, it is within the scope of this invention for the drum 212 to be positioned above the air inlet. A scissor jack 214 is located above the drum 212 and as shown is located above the air inlet. The scissor jack 214 is connected to an actuator 216 which moves the scissor jack 214 between an extended position, where the scissor jack 214 extends across the air inlet and a retracted position where at least a substantial portion of the scissor jack 214 is outside the air inlet.

The air flow control panel 200 further includes a sheet 218 connected at a first end to the drum 212 and at a second end 220 to the scissor jack 214. Movement of the scissor jack 214 from the extended position to the retracted position causes the sheet 218 to move to a closed position so the sheet 218 extends across the air inlet. When the scissor jack 214 moves from the retracted position to the extended position the sheet 218 is rolled onto the drum 212 so that the sheet is positioned out of the air flow path and air moves through the air inlet. Connected to the drum 212 is a torsion spring 222 that biases the drum 212 to rotate and wind the sheet 218 onto the drum 212, thereby biasing the sheet 212 toward the open position. The scissor jack 214 will pull the sheet 218 upward against the spring bias of the torsion spring 222 when moving the sheet 218 to the closed position.

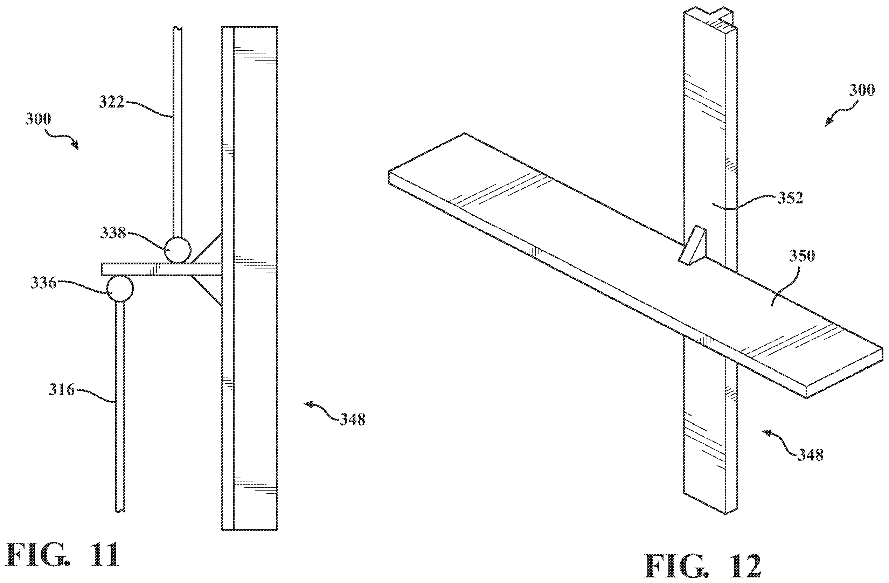

Figs. 11 and 12 show an alternate embodiment of an air flow control panel 300 with an air inlet that defines an air flow path. This embodiment of the invention includes a first sheet 316 with a seal 336 and a second sheet 322 with a seal 338. Both the first sheet 316 and second sheet 322 are positioned upstream of a cross-rib 348 that assists in sealing the air inlet and supporting the first sheet 316 and second sheet 311 when in the closed position. The cross-rib 348 has a horizontal lip 350 that is supported by a vertical rib 352. When the first sheet 316 and the second sheet 322 are in the closed position the seal 336, 338 contacts the horizontal lip 350 to prevent air from flowing through the aperture.

The description of the invention is merely exemplary in nature and, thus, variations that do not depart from the gist of the invention are intended to be within the scope of the invention. Such variations are not to be regarded as a departure from the spirit and scope of the invention.

## Claims

1. An air flow control panel (100; 200) for controlling the flow of air into a vehicle comprising:
an air inlet for a vehicle providing an air flow path;
a drum (112; 212) rotatably positioned below the air inlet;
a scissor jack (114; 214) connected to an actuator (116; 216), the scissor jack (114; 214) is located above the drum (112; 212) and moves between an extended position where the scissor jack (114; 214) extends across the air inlet and a retracted position where substantial portion of the scissor jack (114; 214) is outside the air inlet;
a sheet (119; 218) connected at a first end to the drum (112; 212) and at a second end to the scissor jack (114; 214), wherein movement of the scissor jack (114; 214) between the extended position and the retracted position causes the sheet (119; 218) to move between a closed position, wherein the sheet (119; 218) extends across the air flow path and blocks the flow of air through the air inlet, and an open position wherein the sheet (119; 218) is rolled onto the drum (112; 212) so that the sheet (119; 218) is positioned out of the air flow path and air moves through the air inlet.

2. The air flow control panel (100; 200) of claim 1, further comprising a torsion spring connected to the drum (112; 212) and biasing the drum (112; 212) to rotate so that the sheet (119; 218) moves to the open position and is rolled onto the drum (112; 212).

3. The air flow control panel (100; 200) of claim 1, wherein the scissor jack (114; 214) is located above the air inlet and pulls the sheet (119; 218) to the closed position when the scissor jack (114; 214) moves to the retracted position.

4. The air flow control panel (100; 200) of claim 1, wherein the scissor jack (114; 214) is located below the air inlet and pushes the sheet (119; 218) to the closed position when the scissor jack (114; 214) moves to the extended position.
